Europäisches Patentamt

European Patent Office

Office européen des brevets

(19)

(11) Publication number: **0 268 556 B1**

(12) **EUROPEAN PATENT SPECIFICATION**

(45) Date of publication of patent specification: **04.12.91**

(51) Int. Cl.⁵: **A01G 7/00, A01G 9/24, A01G 31/02**

(21) Application number: **87810622.8**

(22) Date of filing: **29.10.87**

(54) **Plant culturing method and apparatus.**

(30) Priority: **12.11.86 EP 86810516**

(43) Date of publication of application:
**25.05.88 Bulletin 88/21**

(45) Publication of the grant of the patent:
**04.12.91 Bulletin 91/49**

(84) Designated Contracting States:
**AT CH DE ES FR GB IT LI NL SE**

(56) References cited:
**DE-A- 2 600 040      DE-A- 3 530 143**
**DE-U- 7 935 440      GB-A- 1 453 883**
**US-A- 1 604 189      US-A- 4 178 715**

(73) Proprietor: **Wright, Harry Dudley, Dr.**
**Manoir de Bonvent**
**CH-1245 Collonge-Bellerive(CH)**

(72) Inventor: **Wright, Harry Dudley, Dr.**
**Manoir de Bonvent**
**CH-1245 Collonge-Bellerive(CH)**

(74) Representative: **Ritscher, Thomas, Dr. et al**
**RITSCHER & SEIFERT Patentanwälte VSP**
**Kreuzstrasse 82**
**CH-8032 Zürich(CH)**

Rank Xerox (UK) Business Services

## Description

## BACKGROUND OF THE INVENTION

### (1) Field of the Invention

This invention relates generally to the art of cultivating vegetal plants; specifically, it relates to a novel plant culturing method and to an apparatus for carrying out the novel method.

### (2) Description of the Prior Art

The needs and problems of providing agricultural or horticultural products of the vegetable species, including vegetables proper, in regions where water is scarce as well as improved methods of seeding, culturing and harvesting such products in any climate and with a plentiful water supply are recognized but limited, in general, by conventional concepts regarding the substrate for plant root development; both natural substrates or soils as well as synthetic substrates, e.g. those used in hydroponics, tend to support an essentially "three-dimensional" root structure, i.e. one having significant "width" and "depth" dimensions even when relatively flat root structures are concerned.

Flat or "two-dimensional" root structures are known to occur when the soil or plant substrate is restricted to a relatively thin layer, such as in a crevice, or by a flat surface which may be planar or curved and which is capable to limit or direct root expansion including planar root support means in hydroponic cultures. Typical examples of limiting, directing or supporting root development in plant culturing are disclosed in FR - A - 2,046,458, DE - A - 26 00 040 and DE - A - 26 19 305. However, prior art limiting or supporting surfaces as disclosed in these documents have been either substantially impermeable both to roots and to water, or were substantially permeable to both, and in neither case did provide for effective control of the supply of plant roots with water and/or heat.

DE - U - 7 935 440 discloses an irrigation mat comprising a fibrous layer between an impermeable backing and a covering layer made of a polymer film and provided with perforations which function to permit diffusion of water into the fibrous mat center layer for soaking as well as out of the center layer for plant irrigation.

Perforation diameters or areas in the range of from 0.1 to 1.5 mm are disclosed. While the perforations are said to prevent permeation by roots, the perforation disclosed would not prevent permeation by rootlets having a diameter of below 0.1 mm. Further, the perforation diameters are such that the covering layer would be "flooded", i.e. be covered by a continuous film or layer of water.

Furthermore, the irrigation mat is not intended, and not suitable, for use in direct contact with plants but is put under planting pots which will be supplied by water that penetrates or diffuses from the mat through the pots into the soil therein.

Accordingly, this publication neither teaches nor renders obvious a plant culturing method in which the water and fertilizer supply is limited to the plant's actual needs as evidenced by the osmotic suction at the root interface.

A subirrigation system is disclosed in US - A - 1 604 189 and is formed by porous and thick-walled tubes obviously made of a ceramic material and arranged in a soil stratum. Water will diffuse from the pipes into the soil dependent upon the applied hydrostatic pressure. Accordingly, the amount of water supplied to the plants according to US - A - 1 604 189 does not depend upon the plant's needs as evidenced by its osmotic suction but upon the hydrostatic pressure within the pipes.

With regard to an apparatus embodiment of the invention reference is made to GB - A - 1 453 883 teaching greenhouse irrigation by means of tubes arranged in the soil bed of the greenhouse. Neither a limitation of the water and fertilizer supply to that extracted by osmotic suction of the plant nor restriction of heat supply is disclosed in this document.

## OBJECTS OF THE INVENTION

Accordingly, it is a primary object of the invention to provide for a novel method permitting effective and yet simple control of water or aqueous nutrient supply and/or heat supply to plant roots providing growth optimization of plants in a water deficient or arid and/or a heat-deficient environment or climate.

Another important object of the invention is to provide for novel and improved plant growth and harvesting methods that can be applied advantageously in any environment or climate.

A further object of the invention is an apparatus means for carrying out the novel methods under exposed, i.e. unprotected conditions in the open as well as in a greenhouse environment.

## SUMMARY OF THE INVENTION

It has been found that the above objects and further advantages can be achieved by directing plant root growth into a controlled superfacial distribution and by substantially limiting the supply of the plant root with water or aqueous plant nutrient to the area of contact between the plant roots and a means for superfacial root growth control termed an "interface means" herein since it is used to provide for control of interaction between the cultured plants and the growth substrate insofar as uptake of water or aqueous nutrient by the plant roots is concerned.

Thus, according to a first embodiment the invention provides for a plant culturing method as defined in claim 1.

The invention, in a second embodiment, includes a plant culturing apparatus suitable for carrying out the novel method described above and as defined in claim 8.

If a more or less temporary layer is provided on the membrane surface, it could be a natural or synthetic adhesive that is not phytotoxic.

The apparatus may, but need not, be a greenhouse or hothouse as defined in claim 10.

## DISCUSSION OF PREFERRED EMBODIMENTS

As is apparent from the above and will be explained in more detail below, the general method and apparatus embodiments of the invention can be used to minimize water uptake and, hence, water consumption of a given plant culture and are of particular importance where water is a main limiting factor, such as in arid areas. However, the invention can be used advantageously even if water is available freely; this is due to the facts that effective root growth control by restriction of water uptake to the contact or interface area of roots and membrane permits minimization of heat supply to plant cultures in areas where ambient temperatures prevent or decrease plant growth and where heating of the plant culture area is needed at least temporarily.

In fact, sufficient heat to prevent plant damage or growth inhibition at ambient temperatures below the freezing point of water can be supplied for many important culture plants substantially exclusively by heating but the aqueous medium that contacts the second, or root-opposed, surface to a moderate temperature in the range of typically from 10 to 30° C.

Further, root growth control according to the inventive methods provides for improved growth control and harvesting methods even if neither water supply nor heat supply is a limiting factor.

As used herein, the term "superfacial" with regard to root distribution (including the finest roots termed "rootlets") is intended to refer to a root structure that is substantially defined by a "surface" that may be flat ("planar"), curved (e.g. a cylindrical, elliptical, hyperbolical, spherical, spheroidal or similar surface), undulated, corrugated, zig-zag shaped, knobbed (having a multiplicity of identical, similar or differing protrusions), napped (having a multiplicity of identical, similar or differing indentations); thus, a "superfacial" root distribution herein is one which is defined by a "surface" rather than a "space" and has a substantial "width" but no significant "depth" in the sense that the "depth" or "thickness" of a superfacial root distribution is that of a "monolayer" of all roots and rootlets in side-by-side position; this "monolayer" of roots can be planar, curved or otherwise shaped as exemplified above but its thickness will be limited essentially by that of the thickness of the thickest root even though some intercrossing of roots may occur.

Further, the interface means or its membrane constituent forms at least a part or portion of a space or enclosure that holds the aqueous nutrient medium, e.g. water and an aqueous solution of the ions ("aqueous medium" herein) known to be essential to growth of the cultured plant species.

To start the inventive method, at least one plant germination means, that is, one or more seeds or seedling plants will be distributed on the plant contact surface, and the adjacent space or enclosure will contain, or is supplied with, the aqueous medium for contacting the interface means and to permit passage of the aqueous medium to the seed or seedlings and the resulting plants in subsequent stages of maturation; a gas mixture that supports plant growth is provided and can be ambient air or a controlled life-supporting gas mixture generally including oxygen, nitrogen and carbon dioxide; cyclic plant life conditions of lighting and temperature are preferred. Preferably, a holding means, e.g. a layer of sand or the like granular material, is used to hold the seeds close to the membrane and to create conditions favorable to germination.

The seeds or seedlings are allowed to grow into plants of a predetermined stage of maturation on the interface. Generally, the plants are grown to a harvesting degree of maturation but production of seedling plants suitable for transplanting into a conventional growth substrate is not precluded.

In the inventive method substantially all the water, and preferably all or most of the water-soluble ions of the essential elements (e.g. P, Cl, N, Na, K, Ca, Fe, Mg, B and trace elements such as Mn, Cu, Mo, Zn, Co, etc., in plant life supporting concentrations) needed for growth of the cultured plants will be supplied to the plant roots via the membrane; accordingly, permeation of water and aqueous nutrients must be sufficient to provide all the water required but should, at the same time, be capable of preventing "flooding" of the plant-exposed side or surface of the membrane, i.e. while "flooding", e.g. by applying external pressure, might occur temporarily, e.g. for starting growth or harvesting, the membrane should limit permeation of water to a degree that prevents that a substantial or significant amount of liquid phase is formed, or allowed to accumulate, at the plant-exposed side of the interface means, i.e. to permeate without demand by the plant. The aqueous plant nutrient may be heated or cooled if the inventive method is to be used as a heat regulator.

Eventual separation of the plants from the substrate may be effected by cutting or peeling. Separation of the plants from the roots by cutting is a preferred harvesting method because the normal osmotic pump function of the plants is terminated thereby so that the roots can, in general, be separated easily from the interface means.

The interface, or its membrane component, must be capable of supporting the roots and rootlets of the plants, in all stages of their predetermined maturation, in an essentially superfacial distribution as explained above.

In a preferred embodiment of the inventive apparatus the membrane has an essentially tubular structure and is connected with end means for supplying the interior of the tubular structure with the aqueous medium.

As will be apparent from the explanation of the function of the interface means according to the invention, this is a completely different approach than that of hydroponic cultures because the roots of plants cultured according to the inventive method are prevented from entering into the aqueous medium.

## BRIEF DESCRIPTION OF THE DRAWINGS

The invention will be explained in more detail with reference to the annexed drawings in which:

Fig. 1   is a diagrammatic sectional view of a first apparatus embodiment according to the invention illustrating operation of the inventive method with an essentially planar interface means;

Fig. 2   shows the apparatus of Fig. 1 in a harvesting position;

Fig. 3   is a diagrammatic sectional view of a second apparatus embodiment according to the invention illustrating operation of the inventive method with an essentially curved interface means;

Fig. 4   is a diagrammatic cross-sectional view along line 4-4 of Fig. 3;

Fig. 5   is a diagrammatic sectional view to illustrate essential as well as preferred features of the interface means according to the invention;

Fig. 6   is a diagrammatic sectional view of a tubular membrane with an elongated reinforcing member;

Fig. 7   is a diagrammatic sectional view of a further embodiment of the method according to the invention, and

Fig. 8   is a diagrammatic sectional view of a preferred apparatus embodiment of the invention for use as a hothouse.

## DETAILED DESCRIPTION OF THE DRAWINGS

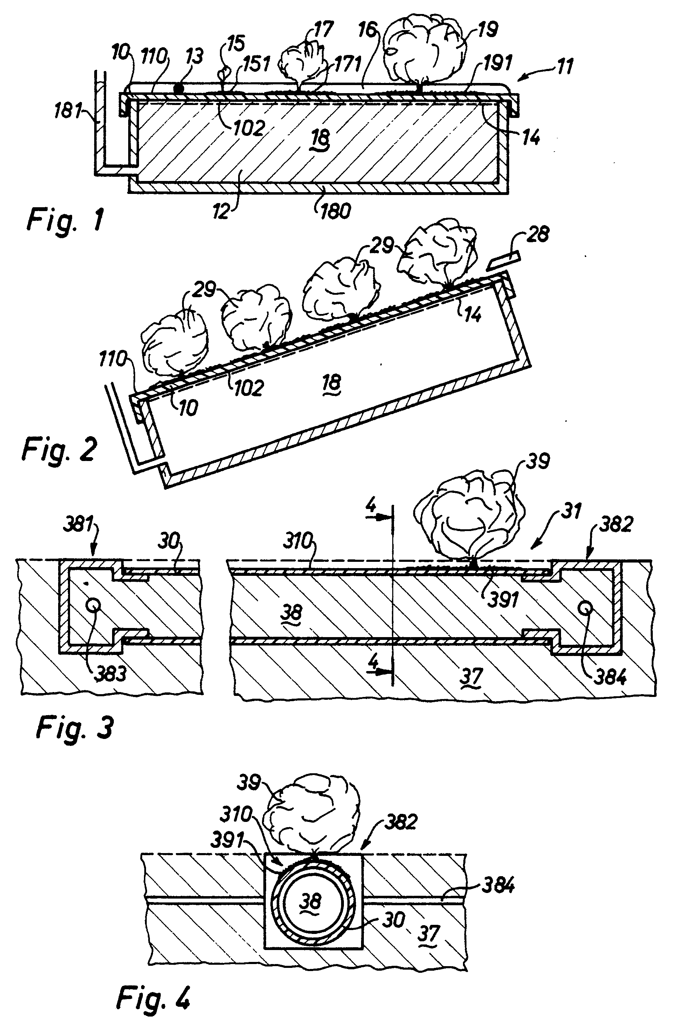

Figure 1 shows various stages of plant growth and this is merely illustrative because in actual operation of the inventive method all plants would normally be in a similar stage of maturation as explained below.

Seeds 13 or seedling plants 15 are arranged, e.g. in an equally distanced distribution depending upon the size of the specific plant, on the plant contacting surface 110 of the interface means 11. While lettuce is illustrated in Figure 1 by way of example, plants of various kinds can be cultured including typical vegetables, such as radishes, spinach, cabbage, tomatoes, cress species, parsley or other herbs, and even carrots (not preferred, however).

While perennial plants can be cultured according to the invention including fruits, e.g. berries, or even trees, annual plants with a normal maturation period between about 5 and about 200 days, preferably about 20 to 100 days, are cultured in a preferred embodiment of the invention.

However, production of seedling plants from seeds of annual or perennial plants is also within the ambit of the invention and a few simple growth tests may be made to establish feasibility and optimization for use of a given plant species.

For example, seeds of the desired plant species, such as lettuce, are distributed on plant contact surface 110 in an equidistanced seed grain array with a distance of from a few millimeters to several centimeters between adjacent seeds. Contact surface 110 of interface structure 11 is the upper face of a membrane 10, e.g. a sheet or web made of a synthetic organic polymer that is water-insoluble and not normally biodegradeable, such as polyalkylenes, e.g. polymethylenes, polyethylenes or polypropylenes, polyacrylics, polyesters and polycarbonates. Cellulosic materials are suitable if made resistant to biodegradation. The thickness of the membranes shown in the drawings is exagerated for clarity.

Suitable polymer membranes in the form of sheets or webs having or not reinforcing elements and including those having a fibrous or fibridic structure, e.g. made from synthetic fibrides by methods known from paper manufacturing and capable of being wetted by the aqueous medium,are preferred. Membrane thicknesses in the range of from 100 to 2000 $\mu$m are typical; neither the lower nor the upper limits appear to be overly critical in that the membrane thickness to be used for a specified plant culture will be governed by general requirements of strength and economy since permeability to nutrient or impermeability to rootlets does not seem to be dependent substantially upon the thickness of a suitable membrane material.

Permeability of the membrane to the aqueous medium is critical, however, and may be caused by "macro-pores" or "micro-pores" (involving or not the molecular structure) provided that the largest openings or pores are small enough to prevent penetration by even the finest plant rootlets and flooding of the plant-exposed side of the interface means under normal conditions. Thus, the pores should in general not exceed about 1 micrometer in diameter and are preferably smaller than 0.1 $\mu$m.

A means 14, e.g. a sieve, grid or the like structure that does not impair nutrient permeation, may be used to support membrane 10 but this is not believed to be critical since the membrane might include a reinforcement or not require support because of hydrostatic support by the aqueous medium 12 within enclosure 18. A top layer 16 may be provided as a holding and/or light-absorbing means as explained in more detail below.

Interface means 11 is secured on the top edge of a tray or basin-type structure 180 made of a structural and water-resistant material, e.g. metal, plastic, concrete, glass, etc., to form enclosure 18 of which the membrane 10 of the interface means 11 forms the top wall. A conduit 181 is provided to feed the aqueous medium 12 into enclosure 18 such that the lower side of interface means 11, i.e. surface 102 of membrane 10, is substantially free of air pockets and kept in continuous contact with aqueous medium 12, normally an aqueous solution containing the ions known to be required for nutrition and growth of the particular plant species in concentrations that are safe to the plants, i.e. are not phytotoxid or detrimental. No substantial air pokkets should be allowed to subsist at the membrane surface 102.

Low-viscosity aqueous solutions are preferred but surfactants that are not phytotoxic may be added if the wetting capacity of the aqueous medium 12 is to be increased for a given membrane material.

As mentioned above, the presentation of plant development in Figure 1 from a seed 13 or seedling plant 15 into a semi-mature plant 17 or fully grown plant 19 is shown but for illustration and does not correspond with actual practice where all individual plants that are being cultured on interface means 11 should normally be in substantially the same stage. For example, seed grains 13 would be distributed substantially evenly, say with a mutual array distance from 10 to 50 mm, on the plant contact surface 110 of interface means 11, e.g. in direct contact with the upper surface of membrane 10. Use of an intermediate layer, e.g. an adhesive, may be advantageous and many seeds are capable to produce a glue or gum when moistened. Use of such adhesive, supplemented where needed by external adhesive, e.g. hydrophilic glues with or without a nutrient, is a suitable temporary holding means 16.

Another preferred holding means for alternative or supplementing use is a layer of water-insoluble grains of an essentially inert material, such as silica, of natural or synthetic provenience. Sand or soil grans in the form of a thin layer, say 2 to 50 mm, are a preferred holding means 16 and will, at the same time, contribute to germination because such a layer will absorb daylight to the extent needed to unblock the natural germination inhibition of many plant seeds. Undesirable growth, e.g. of algae, may be prevented or reduced by using an opaque holding layer on top of interface means 11 and/or by use of other conventional means for selective growth control.

However, use of daylight is not critical and might be replaced by suitably controlled artificial lighting appropriate for plant metabolism. Alternatively, temporary layers of a light-absorbing film or foil may be used to promote seed germination. Once a seed 13 starts to germinate, it grows into a seedling plant 15 having tiny roots 151 that tend to adhere to plant contact surface 110, here the top face of membrane 10, because of the permeating nutrient 12 that will reach surface 110 from enclosure 18 through membrane 10 but does not flood surface 110.

By way of explanation, not limitation, it can be assumed that any chlorophylic plant that comprises a root/leave system acts as an osmotic pump and tends to suck water including plant nutrients through a membrane 10 that is permeable to the nutrient but prevents that the water seeking roots and rootlets 151 grow into or through membrane 10. As a consequence, the entire development of the roots and rootlets 151, 171, 191 from seedling plant 15 through any intermediate growth stages 17 to a harvestable plant 19 will be directed into and maintained in an essentially superfacial root distribution as long as water uptake by the roots is provided by, yet limited to, the plant contact surface 110 and does not normally form a film or layer of substantial thickness thereon.

In fact, root development of various plants (annual and perennial) includes formation of tiny "knuckle-type" structures at many points of contact with surface 110, and the "suction force" that holds roots and rootlets 171, 191 onto surface 110 may be of such force that peeling off without tearing becomes impossible. However, as soon as the "osmotic suction" of the roots and rootlets is terminated, e.g. by cutting the plant stem between roots 191 and the leave structure of plant 19, the entire flat root layer structure can be peeled off, e.g. after some hours. Flooding of surface 110, e.g. by pressurizing the aqueous medium 12 within enclosure 18, is another means to facilitate separating a root structure from surface 110.

The gas phase on top of interface means 11 will normally be air, enriched or not with carbon dioxide, but use of another plant-growth supporting gas mixture is not precluded. Use of a layer 16 that could act as a humidity reservoir against temporary phases of extreme dryness of the gaseous phase or may even act to reduce evaporation of water from the top of interface means 11 into the adjacent gaseous phase or phase layer may be advantageous.

Figure 2 is shown to illustrate one method of harvesting plants 29 from interface means 11 of enclosure 18 explained in Figure 1. Pivoting means (not shown in Figure 2) may be used but are not critical, and a harvesting knife 28 which need not be a blade and could be a wire is caused to move over interface means 11 for cutting the plant stems and harvesting plants 29 into a recipient (not shown).

If a layer 16 of granular material is used, it can be removed by gravity effect prior to actuation of the harvesting knife. The root structures of plants 29 that adhere firmly to interface means 11 at first will become loose within a few, say 3 to 30, hours depending upon the plant species and membrane used, and can be removed, e.g. by a second sweep of harvesting knife 28 closer to interface means 11.

Figure 3 illustrates an interface means 31 according to the invention including an essentially tubular membrane 30 that forms an enclosure 38 for receiving aqueous medium 32 which, in turn, is supplied from a first end means 381, e.g. a housing for connecting an end of the membrane 30 with a conduit 383 for passing nutrient through enclosure 38, and fed out via a second end means 382.

Tubular membranes 30 suitable for this embodiment of the invention can be made from the materials mentioned for membrane 10 with the various parameters discussed above. Tubular membrane structures may be obtained by sealing or welding elongated strips of the membrane material along the longitudinal strip edges, or by other methods of forming tubular membrane structures including extrusion, dip-forming, deposition on perforated tube structures, etc.

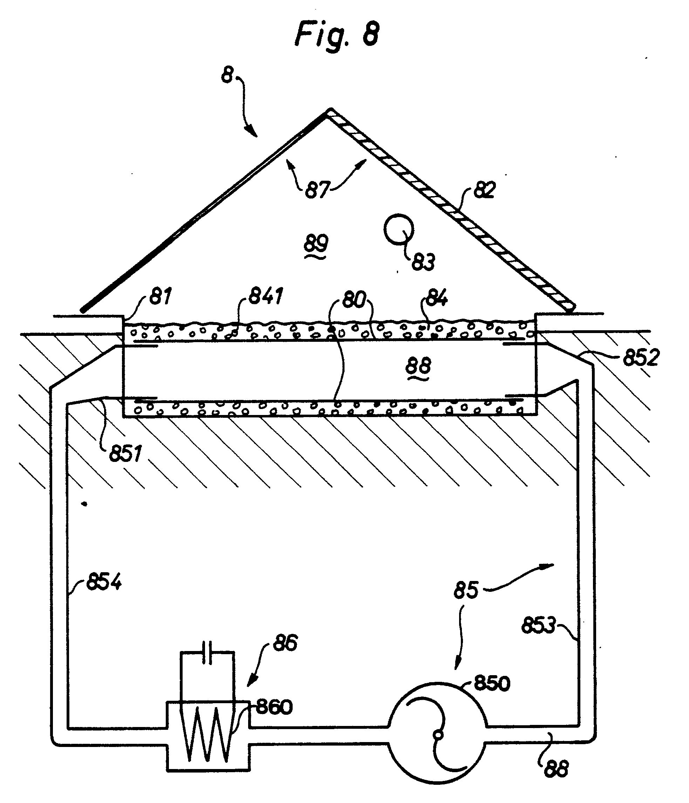

Tubular membranes 30 can be arranged in grooves, e.g. prepared by a scraper in a natural or constructed layer of sand or soil, and a thin layer of such sand or soil may be used as a holding and light-absorbing layer 36. Further, such tubular membranes are of use in hothouses as will be explained in more detail with reference to Figure 8.

Interface means 31 of the type shown in Figure 3 can have a substantially longitudinal extension, say 1 to 1000 meters or more, and/or can be arranged in parallel series or in circular arrangements. Typical diameters will be in the range of from about 20 to 200 millimeters.

Seeding and growth can be achieved in the manner explained in Figure 1 for plane structures except that seed means are placed but on the upper portion of membrane 30.

As shown in the diagrammatic cross-sectional presentation of Figure 4, the roots and rootlets 391 of a plant 39 will again be directed to grow into a superfacial distribution with a curved contour.

Preferably, a plant contact surface 110, 310 according to the invention is defined by a first width dimension of an essentially linear contour (as shown in Figures 1 and 3) and by a second transverse width dimension (i.e. vertical with regard to the plane of drawing in Figures 1 and 3) that has an essentially linear contour (would be apparent from a traverse sectional view of Figure 1) or a curved contour (as shown in Figure 4) but could also have another contour, e.g. undulated. Generally, the first width dimension is horizontally aligned, in essence.

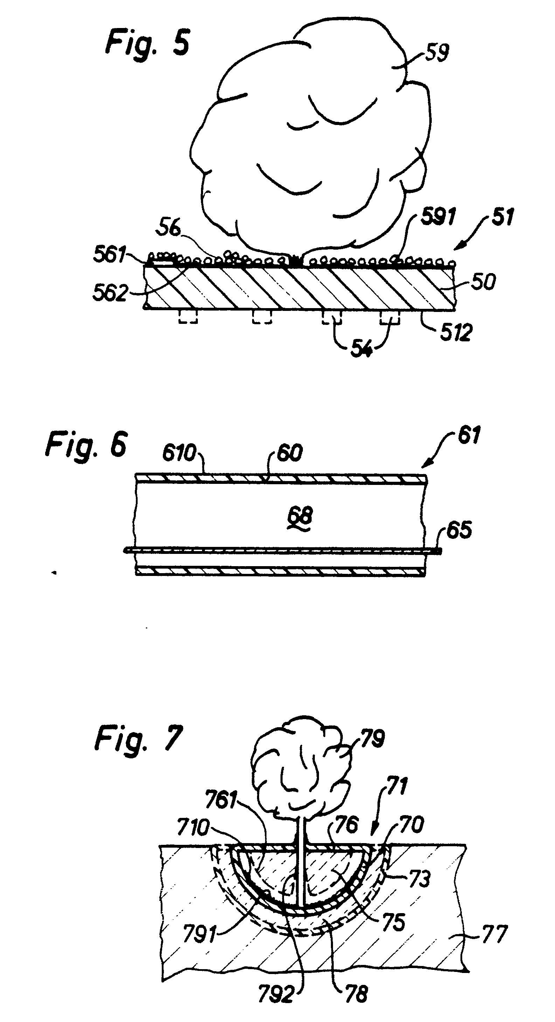

Figure 5 shows another diagrammatic view to illustrate preferred features of an interface means 51 according to the invention. Membrane 50 supported or not by a grid 54 or similar structure is covered by a thin layer 56 of sand or other granular material that absorbs light to the extent needed for seed germination and acts as a preferred holding means. A layer thickness of from 2 to 50 mm will be suitable for many purposes of the invention. Substantially all granules 561 of a holding layer of a granular material will be above the roots that grow in direct contact with the membrane. The first surface 510 of membrane 50 is either the contact surface or (if covered with an adhesive layer) is adjacent to the contact surface; the other surface 512 of membrane 50 is in contact with water and nutrient in liquid form.

The roots and rootlets 591 of plants 59 will be directed into superfacial development by the upper surface of membrane 50 which may, or may not, carry a continuous or discontinuous adhesive layer 561 used for attaching the seed granules (not shown) or seedling plants (not shown) on membrane 50. It has been observed that a holding and light-absorbing layer 56 of a granular material does not significantly affect development of an essentially superfacial root distribution on membrane 50 even if the thickness of layer 56 is substantial provided that flooding of the membrane surface is prevented. However, layer 56 should not become saturated with humidity to the extent of acting as a secondary water source since this would detract from the general aim of achieving and maintaining an essentially superfacial root distribution.

Figure 6, again, illustrates an interface means 61 including a tubular membrane. In order to facilitate harvesting when using elongated tubular membranes 60, a flexible reinforcing member, e.g. a wire or band 65, is provided within enclosure 68 to facilitate lifting a work portion of the tubular membrane, e.g. for seeding and/or harvesting purposes, from its groove in the soil onto a mobile platform, e.g. a truck.

Figure 7 illustrates an interface means 71 comprising a spherical membrane 70 that provides an "inversely" curved plant growth surface 710. Depending upon ambient climatic conditions the membrane 70 can be in direct contact with the substrate or ground 77, e.g. soil which is, or can be, supplied with water by natural and/or artificial irrigation.

Alternatively, an outer layer 73 formed of a water-impermeable material can be provided to encompass membrane 70 and to contain an intermediate layer 78 formed of aqueous medium or a solid, pulverulent or fluid composition that contains, or receives, aqueous medium and permits an essentially homogeneous distribution of aqueous medium at the outer surface of the membrane 70. Means to supply or replenish the intermediate layer 78 with aqueous medium will be used, in general, but are not shown in Figure 7.

In either case, i.e. regardless of whether the aqueous medium is supplied from substrate 77 or from layer 78, the structure of the roots 791 of a plant 79 will be induced into, and maintained in, a superfacial distribution on plant contact surface 710 as long as the enclosure or space 75 that may, or may not, be filled with a dry granular material contains substantially no water in liquid form; in other words, the top portion 76 of space 75 must not permit permeation of water in liquid phase but that portion need not be, nor remain, substantially horizontal as shown in continuous line but could conform with the root distribution as indicated in broken lines at 761.

Further, the superfacial distribution of roots 791 will be advantageous regardless of whether the aqueous medium is supplied from the substrate 77 or from an intermediate layer 78 since such a root structure will facilitate transplantation, e.g. of perennial plants that develop a stem 792.

Minimization of water supply will be provided when also using an intermediate layer 78 between membrane 70 and substrate or ground 77.

It will be understood that a spherical shape of membrane 70 is not critical and that tubular or other shapes of membrane 70 will be suitable as long as the water supply of root structure 791 is restricted to permeation through the membrane.

Figure 8 shows a diagrammatic view of an apparatus 8 for operating the plant culturing method disclosed herein and for use as a hothouse. The term "hothouse" as used herein is intended to refer generally to any structure suitable for maintaining an enclosed volume of air or other gas mixture that sustains plant growth around a number of plants. Conventional hothouse or greenhouse structures are but examples since both smaller and larger structures as well as opaque materials for confining the enclosure may be used for the hothouse embodiment of the inventive apparatus. While greenhouses may, but need not, include artificial heating means, i.e. other than by sun-generated heat radiation, hothouses do normally comprise such other heating means.

By the same token, a conventional structure of the enclosure, e.g. with a roofing means having an essentially triangular cross-section as shown in Figure 8 is suitable; however, other roofing means with a round, square or rectangular cross-section can be used.

The essential feature of the inventive hothouse apparatus diagrammatically presented in Figure 8 is at least one tubular membrane 80 which may have a structure similar to that explained in connection with Figures 3 and 4 above and is arranged in a bedding 84 of a granular and preferably inert material 841, such as natural or artificial sand. A bedding support 81, e.g. made of concrete or the like is used to hold the bedding 84 and at least one membrane 80.

The at least one tubular membrane 80 contains aqueous medium 88, normally a plant nutrient solution as explained above. A supply means 85 serves to circulate the aqueous medium 88 and includes a pump 850 connected by conduits 853, 854 with end means 851, 852 at both ends of membrane 80.

A heating means 86, e.g. a heat exchanger 860 operated electrically or by means of a circulating heat transfer fluid, is provided in the circulating stream of the aqueous medium 88 to maintain the latter at a predetermined temperature of typically between 10 and 35° C. Conventional temperature control means will be used but are not illustrated and need no detailed explanation. Also, means for maintaining a predetermined com position of the aqueous medium including filters or other cleaning devices and inputs for water and/or nutrient will be used in actual operation of hothouse 8 but are conventional and not shown in Figure 8.

Plants (not shown) will be cultured on membrane 80 substantially as explained in connection with Figures 3 and 4 except that a roofing means 87 is provided to maintain a controlled volume 89 of air or similar gas around the upper parts of the plants grown on tubular membrane 80. A "controlled volume" of air in the present context is intended herein to refer to a gas volume which is delimited against ambient conditions outside of roofing means 87 and in which some or all ambient parameters can be compensated.

The main parameters as far as plant growth is concerned are gas composition (including humidity), temperature, and actinic radiation. Actinic radiation may be controlled by an artificial light source 83 combined with suitable, e.g. opaque materials for all or some roofing panels 82; further, heat insulating materials may be used for some or all of the roofing panels. Also, gas composition including humidity may be controlled by conventional means (not illustrated).

The essential parameter that is controlled according to the hothouse embodiment of the invention is "temperature". Without wishing to be bound by a specific theory, it is assumed that a heat "aura" for optimum growth temperature of or immediately around the plants can be achieved by the inventive method if the aqueous nutrient that contacts the root-opposed surface of a membrane 10, 30, 60, 70 or 80 is used to supply heat in a plant growth environment that otherwise would be "heat deficient" at least temporarily, i.e. fail to support, or even terminate, plant growth, such as night frost or prolonged periods of ambient temperatures at which plants would fail to grow or be damaged.

Regardless of any theory, it has been observed that good to excellent plant growth conditions can be maintained in a conventional hothouse in an external environment with prolonged periods of temperatures substantially below freezing points with extremely small amounts of heat energy when the plants are cultured on membranes according to the invention and when the only artificial heat is that supplied by the aqueous plant nutrient maintained at a temperature of typically between 15 and 25° C.

While the insulating effects of the enclosed volume 89 within roofing means 87 as well as of the bedding 84 may be a contributing factor, the essential advantage provided by the hothouse embodiment of the invention is heat control at, and heat supply to, the plant roots at the interface means provided by membrane 80 and the extremely close root/membrane contact caused by osmotic forces and providing for optimum heat transfer.

Finally, in connection with Figure 8, it should be emphasized that the drawing is entirely schematic and that it is not intended to show any particular spatial or dimensional relations.

Operation of the inventive method will be explained in the following examples.

Example 1

An arrangement essentially as shown in Figure 1 was used; the tray 180 had a rectangular shape (800 × 50 × 10 mm) and was covered by a sheet of a polypropylene membrane (CELGARD, reg. trademark of the Celanese Corporation of USA) having a pore size of about 0.02 micrometers. The aqueous medium 12 was a 0.3 % by weight solution of a commercial plant nutrient or fertilizer (SINESOL, reg. trademark of the Sinesol Company, Geneva, Switzerland) in 99.7 % by weight of tap water. The dry membrane had a thickness of 130 μm.

The fertilizer had the following composition (percent by weight unless otherwise indicated): N 1.5; P (as $P_2O_5$) 0.55; K (as $K_2O$) 2.8; Mg 0.3; Ca 0.25; Fe 100 ppm; Mo 38 ppm; B 25 ppm; Mn 10 ppm; Zn 5 ppm; Co 5 ppm; Cu 2 ppm, and a pH of 4.5.

Seed grains of the following species were used (grain distance 20 to 30 mm): radishes, lettuce, spinach. The trays were arranged in a greenhouse at a temperature of 15 to 25° C and a relative humidity of 60 % with external temperatures between 5 and 30° C and no heating of the greenhouse. The seeds, premoistened or not, were distributed on the upper surface of the membrane and allowed to dry thereon. An adhesive bond between the seed grains and the membrane was obtained. Then the membrane plus adhering seed grains was covered with a layer of sand (grain size 0.5 to 1.0 mm) having a thickness of 20 mm and aqueous medium was fed into the trays so as to fill enclosure 18. A small pressure head was maintained to assure that the total membrane surface was kept permanently in contact with the aqueous medium.

Under normal daylight exposure the seeds germinated within 2 to 8 days at a rate of above 75 %, and after growth periods of 20 to 60 days the plants were removed from the membrane by cutting the stems.

The root distribution was substantially superfacial relative to the planar membrane, and the roots adhered firmly to the membrane as long as the plant stems were not cut.

The quality of the harvested plants did not differ significantly from plants obtained in conventional soil beds. The amount of water required for growth was, however, significantly smaller for the plants cultured according to the inventive method, and harvesting was simpler.

Example 2

Example 1 was repeated except that the external temperatures were predominantly below 0° C with lowest temperatures of below -10° C. A small electric heater with automatic control was used to hold the temperature of aqueous medium 12 at 20° C (± 5). Further, a fluorescent lamp was used to supplement daylight.

Germination and growth rates obtained were similar to those obtained in Example 1.

## Claims

1. A plant culturing method comprising:
providing a plant growth interface means (11) including a membrane (10) that is substantially permeable to an aqueous plant nutrient medium (12) but substantially impermeable to plant roots and rootlets (151, 171, 191) and is made of a substantially water-insoluble and non-biodegradeable material; said interface means (11) having a plant contact surface (110) for directing said roots and rootlets into a substantially superfacial distribution and said membrane (10) forming at least a portion of an enclosure (18) and having: (a) a first surface that constitutes said plant contact surface (110) or is adjacent thereto, and (b) a second surface (102) exposed to said aqueous medium; said membrane (10) having a pore size of below 1 μm to prevent flooding of said first surface;
arranging a plant germinating means (13, 15) in the form of seeds or seedling plants on said plant contact surface (110);
maintaining said second surface (102) of said membrane (10) in contact with said aqueous medium (12) in liquid phase to induce formation of said superfacial distribution;
allowing said germinating means (13, 15) to grow into plants (17) of a predetermined stage of maturation on said interface means (11) and separating said plants (17) from said interface means (11).

2. The method of claim 1 wherein said membrane is provided with a holding means (56) for said germinating means (13, 15) in the form of a water-soluble adhesive (561) that is not phytotoxic and/or in the form of a granular material (562) that is substantially water-insoluble.

3. The method of claim 1 wherein said surface (110) is covered by a layer (16) having a light absorption capacity suitable for seed germination.

4. The method of any of claims 1 to 3 wherein said plant contact surface (110) has a shape defined by a first width dimension of an essentially linear contour and by a second transverse width dimension that has an essentially linear, curved or undulating contour.

5. The method of any of claims 1 to 4 wherein said plant contact surface (310) includes an essentially tubular membrane (30).

6. The method of any of claims 1 to 5 wherein said membrane (30) has an elongated tubular structure and is connected to an inlet end (381) and an outlet (381) for passing said aqueous medium through said structure; said structure being arranged in a bedding (37) formed by an essentially inert granular material so as to substantially prevent ambient light to reach said plant contact surface (310); and maintaining said aqueous medium at a predetermined temperature for heat exchange with said bedding so as to optimize plant growth temperature conditions.

7. The method of claim 6 wherein said bedding (84) is provided within a hothouse (8) and wherein said heat exchange (86) is substantially the only artificial heating provided in said hothouse (8).

8. A plant culturing apparatus for carrying out the method of any of claims 1 to 7 comprising an interface means (11) including a membrane (10) that is permeable to an aqueous plant nutrient medium (12) but impermeable to plant roots and rootlets (151, 171, 191) and is made of a substantially water-insoluble and non-biodegradeable material, said interface means (11) having a surface (110) for contact with said plant roots and rootlets and for maintaining said roots and rootlets in a substantially superfacial distribution and forming at least a part of an enclosure (180) for receiving said medium (12); and said membrane having a pore size of below 1 μm to prevent flooding of said surface (110).

9. The apparatus of claim 8 wherein said interface means (11) includes a tubular membrane (30) connected with end means (381, 382) for supplying said tubular membrane's interior space (38) with said medium (12).

10. The apparatus of claims 8 or 9 for use as a hothouse (8) comprising a bedding support (81) containing at least one of said tubular membranes (80) and a granular material (841) for forming a bedding to encompass said at least one tubular membrane (80); a supply means (85) for passing said aqueous medium through sand end means (381, 382); a heating means (86) for maintaining said aqueous medium (88) at said predetermined temperature; and a roofing means (87) capable of maintaining a controlled volume (89) of air on top of said bedding (84).

## Revendications

1. Procédé de culture de plantes comprenant les étapes consistant:
   - à mettre en oeuvre un moyen d'interface (11) de croissance de plantes comprenant une membrane (10) qui est sensiblement perméable à un milieu aqueux nutritif (12) pour plantes mais sensiblement imperméable à des racines et radicelles (151, 171, 191) de plantes et est réalisée en un matériau sensiblement insoluble dans l'eau et non biodégradable; ledit moyen d'interface (11) ayant une surface de contact (110) avec les plantes pour orienter lesdites racines et radicelles selon une répartition sensiblement en surface et ladite membrane (10) formant au moins une partie d'une enceinte (18) et ayant
   
   a) une première surface qui constitue ladite surface de contact (110) avec les plantes ou est adjacente à celle-ci; et
   b) une deuxième surface (102) exposée audit milieu aqueux, ladite membrane (10) ayant une dimension de pores inférieure à 1 micron pour empêcher l'inondation de ladite première surface;
   - à disposer un moyen de germination de plantes (13, 15) sous forme de semences ou de jeunes plants sur ladite surface de contact (110) avec les plantes ;
   - à maintenir ladite deuxième surface (102) de ladite membrane (10) en contact avec ledit milieu aqueux (12) en phase liquide pour provoquer la formation de ladite répartition en surface;
   - à permettre audit moyen de germination (13, 15) de pousser en donnant des plantes (17) à un stade de développement prédéterminé sur ledit moyen d'interface (11) et
   - à séparer lesdites plantes (17) dudit moyen d'interface (11).

2. Procédé selon la revendication 1, dans lequel ladite membrane est pourvue d'un moyen de maintien (56) pour ledit moyen de germination (13, 15) sous la forme d'une substance adhésive (561) qui est soluble dans l'eau et non phytotoxique et/ou sous la forme d'un matériau granulaire (562) sensiblement insoluble dans l'eau.

3. Procédé selon la revendication 1, dans lequel ladite surface (110) est recouverte d'une couche (16) ayant une capacité d'absorption de la lumière convenant à la germination des plantes.

4. Procédé selon l'une quelconque des revendications 1 à 3, dans lequel ladite surface de contact (110) avec les plantes a une forme définie par une première dimension en largeur, de profil sensiblement rectiligne, et par une deuxième dimension transversale ayant un profil sensiblement rectiligne, courbe ou ondulé.

5. Procédé selon l'une quelconque des revendications 1 à 4, dans lequel ladite surface de contact (310) avec les plantes comprend une membrane sensiblement tubulaire (30).

6. Procédé selon l'une quelconque des revendications 1 à 5, dans lequel ladite membrane (30) a une structure tubulaire allongée et est reliée à une extrémité d'entrée (381) et à une sortie (382) pour le passage à travers cette structure dudit milieu aqueux; ladite structure étant disposée dans un lit (37) formé d'un matériau granulaire sensiblement inerte de façon à empêcher sensiblement la lumière ambiante d'atteindre ladite surface de contact (310) avec les plantes ; et ledit milieu aqueux étant maintenu à une température prédéterminée pour échanger de la chaleur avec ledit lit de manière à optimiser les conditions de température pour la croissance des plantes.

7. Procédé selon la revendication 6, dans lequel ledit lit (84) est disposé dans une serre chaude (8) et dans lequel l'échange de chaleur (86) est sensiblement le seul chauffage artificiel prévu dans la serre chaude (8).

8. Appareil pour cultiver des plantes pour la mise en oeuvre du procédé selon l'une quelconque des revendications 1 à 7, comprenant un moyen d'interface (11) comportant une membrane (10) qui est perméable à un milieu aqueux (12) nutritif pour plantes mais imperméable à des racines ou radicelles (151, 171, 191) de plantes et est réalisée en un matériau sensiblement insoluble dans l'eau et non biodégradable, ledit moyen d'interface (11) ayant une surface (110) destinée à être en contact avec lesdites racines et radicelles de plantes et à maintenir lesdites racines et radicelles dans une répartition sensiblement en surface et constituant au moins une partie d'une enceinte (180) pour recevoir ledit milieu (12); et ladite membrane ayant une dimension de pores inférieure à 1 micron pour empêcher l'inondation de ladite surface (110).

9. Appareil selon la revendication 8, dans lequel ledit moyen d'interface (11) comprend une membrane tubulaire (30) reliée à des moyens d'extrémité (381, 382) pour alimenter le volume intérieur (38) de ladite membrane tubulaire avec ledit milieu (12).

10. Appareil selon la revendication 8 ou 9, destiné à être utilisé dans une serre chaude (8) comprenant un support formant lit (81) contenant au moins une membrane tubulaire (80) telle que précitée et un matériau granulaire (841) pour former un lit pour entourer ladite membrane tubulaire (80); un moyen d'alimentation (85) pour faire passer ledit milieu aqueux à travers lesdits moyens d'extrémité (381, 382); un moyen de chauffage (86) pour maintenir ledit milieu aqueux (88) à ladite température prédéterminée; et un moyen formant toit (87) capable de maintenir au-dessus dudit lit (84) un volume d'air (89) de paramètres réglés.

**Patentansprüche**

1. Pflanzenzüchtungsverfahren umfassend:
das Verwenden einer Grenzflächeneinrichtung (11) für das Pflanzenwachstum mit einer Membran (10), die für ein wässriges Pflanzennährmedium (12) im wesentlichen durchlässig, aber im wesentlichen undurchlässig für die Wurzeln und Würzelchen (151, 171, 191) der Pflanzen ist und aus einem im wesentlichen wasserunlöslichen und biologisch nicht abbaubaren Material besteht, wobei die Grenzflächeneinrichtung (11) eine Pflanzenkontaktfläche (110) besitzt, um die Wurzeln und Würzelchen in eine im wesentlichen flächige Verteilung zu lenken, und wobei die Membran (10) mindestens einen Teil eines umschlossenen Raumes (18) bildet und aufweist:
(a) eine erste Fläche, welche die Pflanzenkontaktfläche (110) bildet oder dieser benachbart ist und (b) eine zweite Fläche (102), die dem wässrigen Medium ausgesetzt ist, wobei die Membran (10) eine Porengrösse von unter 1 μm besitzt, um ein Ueberfluten der ersten Fläche zu vermeiden;
die Anordnung von Pflanzenkeimungsmitteln (13, 15) in Form von Saatgut oder Pflanzenkeimlingen auf der Pflanzenkontaktfläche (110);
Halten der zweiten Fläche (102) der Membran (10) in Kontakt mit dem wässrigen Medium (12) in flüssiger Phase, um das Zustandekommen der flächigen Verteilung zu induzieren;

Wachsenlassen der Pflanzenkeimungsmittel (13, 15) zur Gewinnung von Pflanzen (17) mit vorbestimmtem Reifungszustand auf der Grenzflächeneinrichtung (11) und
Trennen der Pflanzen (17) von der Grenzflächeneinrichtung (11).

2. Verfahren nach Anspruch 1, bei welchem die Membran mit einem Haltemittel (56) für die Keimungsmittel (13, 15) in Form eines wasserlöslichen Haftstoffes (561), der nicht phytotoxisch ist, und/oder in Form eines körnigen Materials (562) versehen ist, das im wesentlichen wasserunlöslich ist.

3. Verfahren nach Anspruch 1, bei welchem die Fläche (110) mit einer Schicht (16) bedeckt ist, die eine für die Pflanzenkeimung ausreichende Lichtabsorptionsfähigkeit hat.

4. Verfahren nach einem der Ansprüche 1 bis 3, bei welchem die Pflanzenkontaktfläche (110) eine Form besitzt, die durch eine erste Flächendimension mit einem im wesentlichen linearen Umriss und durch eine zweite, quer dazu verlaufende Flächendimension bestimmt ist, die einen im wesentlichen linearen, gekrümmten oder gewellten Umriss hat.

5. Verfahren nach einem der Ansprüche 1 bis 4, bei welchem die Pflanzenkontaktfläche (310) eine im wesentlichen schlauchförmige Membran (30) aufweist.

6. Verfahren nach einem der Ansprüche 1 bis 5, bei welchem die Membran (30) ein längliches schlauchförmiges Gebilde und mit einem Einlassende (381) sowie einem Auslass (381) zum Durchleiten des wässrigen Medium durch das Gebilde verbunden ist, wobei das Gebilde in einer Bettung (37) liegt, die von einem im wesentlichen inerten körnigen Material gebildet wird, um im wesentlichen zu vermeiden, dass Umgebungslicht die Pflanzenkontaktfläche (310) erreicht, und wobei das wässrige Medium zum Wärmeaustausch mit der Bettung auf einer vorbestimmten Temperatur gehalten wird, um die Temperaturbedingungen des Pflanzenwachstums zu optimieren.

7. Verfahren nach Anspruch 6, bei welchem die Bettung (84) in einem Treibhaus (8) angeordnet ist und wobei der Wärmeaustausch (86) praktisch die einzige, in dem Treibhaus (8) vorgesehene Heizung ist.

8. Pflanzenzüchtungsanlage zur Durchführung des Verfahrens nach einem der Ansprüche 1 bis 7 mit einer Grenzflächeneinrichtung (11), welche eine Membran (10) besitzt, die durchlässig für ein wässriges Pflanzennährmedium (12) aber undurchläsig für Pflanzenwurzeln und -würzelchen (151, 171, 191) ist und aus einem im wesentlichen wasserunlöslichen und biologisch nicht abbaubaren Material besteht, wobei die Grenzflächeneinrichtung (11) eine Fläche (110) zum Kontakt mit den Pflanzenwurzeln und -würzelchen und zum Halten der Wurzeln und Würzelchen in einer im wesentlichen flächigen Verteilung aufweist und mindestens einen Teil eines umschlossenen Raumes (180) zur Aufnahme des Mediums (12) bildet, und wobei die Membran eine Porengrösse von unter 1 μm aufweist, um ein Ueberfluten der Fläche (110) zu vermeiden.

9. Anlage nach Anspruch 8, bei welcher die Grenzflächeneinrichtung (11) eine schlauchförmige Membran (30) aufweist, die mit Endanschlüssen (381, 382) verbunden ist, um den Innenraum (38) der schlauchförmigen Membran mit dem Medium (12) zu versorgen.

10. Anlage nach Anspruch 8 oder 9 zur Verwendung als Treibhaus (8) mit einem Bettungsträger (81), der mindestens eine schlauchförmige Membran (80) sowie ein körniges Material (841) zur Bildung einer Bettung enthält, um die mindestens eine schlauchförmige Membran (80) zu umhüllen; einer Versorgungseinrichtung (85) zum Durchleiten des wässrigen Mediums durch die Endanschlüsse (381, 382); Heizeinrichtungen (86), um das wässrige Medium (88) auf der vorbestimmten Temperatur zu halten, und einer Ueberdachung (87), die ein kontrolliertes Luftvolumen (89) über der Bettung (84) zu erhalten befähigt ist.

Fig. 1

Fig. 2

Fig. 3

Fig. 4

**Fig. 5**

59

56

591    51

561

562

50

512

54

**Fig. 6**

610    60    61

68

65

**Fig. 7**

79

761

710    76    70

73

791    75

792    78    77

# Fig. 8